# EUROPEAN PATENT APPLICATION

(11) **EP 2 983 118 A1**
(43) Date of publication of application: **10.02.2016**
(21) Application number: 14425116.2
(22) Date of filing: 17.09.2014
(51) Int. Cl.: G06Q 10/10, G06Q 40/08, G07C 5/00, H04N 7/18, H04W 4/02, H04W 4/04

(54) **System and method for producing an electronic road accident document**

(30) Priority: 30.05.2014 EP 14425064; 30.05.2014 EP 14425065
(71) Applicant: Octocam S.r.l., 00173 Roma (RM) (IT)
(72) Inventor: Mungo, Andrea, 16031 Pieve Ligure (GE) (IT)
(74) Representative: Ferroni, Filippo

(57) **Abstract**

The present invention relates to a system (1) and a method for producing an electronic accident report document after a road accident has occurred between vehicles (V), wherein said system (1) comprises at least one vehicle monitoring apparatus (3) adapted to acquire information about a vehicle (V) as it circulates, filling means (2) adapted to fill out the electronic accident report document after a road accident has occurred, and processing means (10) comprising a central processing unit (11) configured for comparing said information acquired by the apparatus (3) with the information contained in the completed electronic accident report document, and for releasing the electronic accident report document only if said comparison has a predetermined outcome.

## Description

The present invention relates to a system and a method for producing an electronic road accident report document.

As is known, organizations accountable for paying compensation for damages caused by road accidents, e.g. insurance companies, provide a service to people who have suffered damages from a road accident. De facto, such organizations provide a service to the community, because they minimize the effects of damages suffered by a relatively low number of individuals by exploiting an economic base built up by using the insurance premiums paid by all insured parties.

The service offered by these organizations operates satisfactorily until the amount of indemnities to be paid and the incomes deriving from insurance premiums remains under a threshold value; when the value of this ratio exceeds said threshold value, it becomes necessary, in order to be able to properly manage the risk taken by the insurance company, to increase the economic base by raising insurance premiums and/or taxes, so as to cause the value of said ratio to return below the threshold value.

As is known, some compensation requests made to organizations accountable for paying compensation for damages caused by road accidents are however fraudulent, i.e. based on feigned road accidents.

Such frauds rely on the fact that it is difficult and/or even impossible, in some circumstances, to ascertain if the damages suffered by the party that has requested a compensation have actually been caused by the road accident described in the compensation request, since it is not possible to reconstruct the dynamics of the road accident.

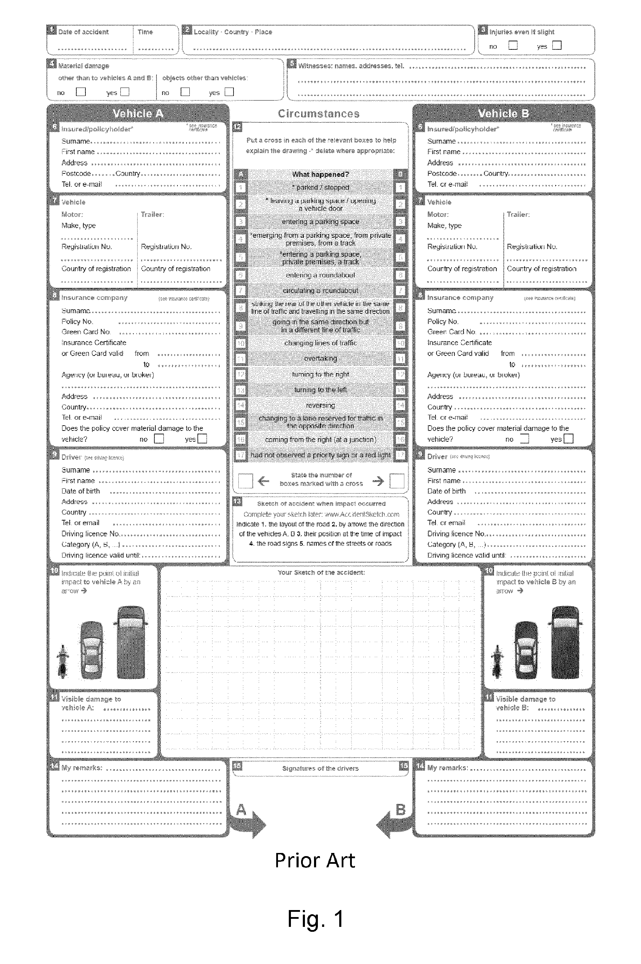

The compensation request is typically made by means of a pre-printed form, i.e. the so-called Accident Report Form, like the one shown in Fig. 1, which is often the only document that can be objectively verified by the organization accountable for paying compensation for damages.

It should be noted that this form is always filled out after a road accident, and therefore it may be written by slightly shocked people; it follows that there is a high probability that wrong information will be entered by individuals in such conditions.

Moreover, a person in an altered state may likely miss some details, e.g. that the other party has no insurance certificate or has a roughly falsified one (e.g. by making a copy with changed data), that there is no correspondence between the vehicle identification number and the number plate, that the other party's name is not the one stated in the documents, or the like.

In addition, the reconstruction of the dynamics of the road accident is usually made on the basis of the picture drawn on the accident report form (see box 13 in Fig. 1) by one of the parties involved in the accident, and also of information collected after the accident, if any. It is thus possible to create a false road accident (i.e. feigned by both parties) or an intentional road accident (i.e. intentionally caused by one of the involved parties). This latter category (intentional accidents) typically includes accidents (e.g. rear-ending) that should cause physical damage to the driver (e.g. whiplash injury), for which the organization accountable for paying compensation for the suffered damage will have to pay a considerable indemnity. As aforementioned, this kind of fraud is based on the fact that it is not possible to verify, via the accident report form, if the road accident was sufficiently serious to cause the physical damages for which one of the involved parties is claiming compensation, possibly even after some time has passed.

The basic technical problem tackled by the invention is therefore to provide a method and a system for reducing the probability that an organization accountable for paying compensation for damages caused by road accidents will be swindled.

Another technical problem is to provide a method and system for producing or generating an accident report document that contains no errors, whether accidental ones or errors intentionally made while filling said document.

One idea that solves such problems is to produce an electronic accident report document that can be filled out in an automated and/or assisted and/or interactive manner, thus reducing the probability of error to a minimum.

According to one possible embodiment of the invention, the margin of error can be further reduced by comparing information acquired by data acquisition means (such as, for example, black boxes installed in cars by insurance companies) with the information contained in an electronic accident report document produced in accordance with the method of the invention (e.g. a smartphone, a tablet or another similar telecommunications device), so as to be able to detect any incongruities.

In this manner, it is possible to reduce the probability that the organization accountable for paying compensation for damages caused by road accidents will be swindled, because the correctness of the information can be verified prior to releasing the accident report document, i.e. there is a possibility of preventing the release of the accident report form in the event that the information stated by one of the parties is not consistent with the information detected by the data acquisition means. By preventing the release of said document, the accident report will be made worthless, thus avoiding the creation of false accidents and/or preventing either party from making false statements (perhaps because under blackmail threat or slightly shocked).

The features of the method for producing an accident report document according to the invention are set out in the claims appended to this description.

The invention further comprises a system for implementing the method, the features of which are also set out in the appended claims.

Such features as well as further advantages of the present invention will become more apparent from the following description of a preferred example of embodiment thereof as shown in the annexed drawings, which are supplied by way of non-limiting example, wherein:
- Fig. 1 shows an accident report form according to the prior art;
- Fig. 2 is a schematic view of a system for filling out accident report forms according to the invention;
- Fig. 3 is a block diagram of an electronic computer included in the system of Fig. 2;
- Fig. 4 is a front view of a first embodiment of filling means included in the system according to the invention;
- Fig. 5 illustrates a first mode of operation of the system of Fig. 2;
- Fig. 6 illustrates a second mode of operation of the system of Fig. 2;
- Fig. 7 illustrates a mode of operation of the filling means of Fig. 4.

Prior to describing in detail what is shown in the drawings, it is worth making clear that any reference to "an embodiment" in this description will indicate that a particular configuration, structure or feature described in regard to the embodiment is comprised in at least one embodiment. Therefore, the phrase "in an embodiment" and other similar phrases, which may be present in different parts of this description, will not necessarily be all related to the same embodiment. Furthermore, any particular configuration, structure or feature may be combined in one or more embodiments in any way deemed appropriate. The references below are therefore used only for simplicity's sake, and do not limit the protection scope or extension of the various embodiments.

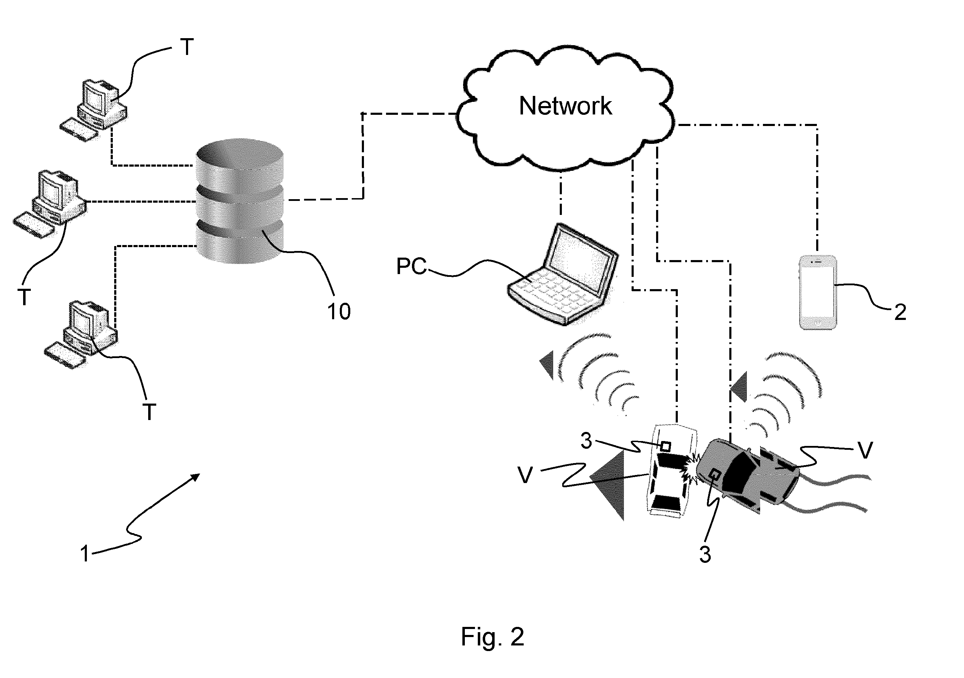

A system for producing an electronic accident report document according to the invention, designated as a whole 1 in Fig. 2, comprises the following parts:
- at least one vehicle monitoring apparatus 3 (e.g. a black box interfaced to the CAN bus of the vehicle), adapted to be installed in a vehicle V and comprising data acquisition means for acquiring data such as position, acceleration, speed, etc. of the vehicle, which can acquire information about said vehicle V as it circulates, and transmission means configured for transmitting at least a part of said information to processing means 10;
- filling means 2 (e.g. a smartphone, a tablet, a personal computer PC or another telecommunications device capable of sending data), adapted to fill out the electronic accident report document, and comprising communication means configured for transmitting said completed electronic accident report document to the processing means 10;
- processing means 10 configured for receiving said information from the monitoring apparatus 3 and the completed electronic accident report document from the filling means 2, wherein said processing means 10 comprise a central processing unit 11 configured for comparing said information with the information contained in the completed electronic accident report document.

The data acquisition means of the apparatus 3 comprise positioning means (such as, for example, a GPS/EGNOS/GLONASS receiver) and/or accelerometric means (such as, for example, a piezoelectric gyroscope), which allow said apparatus 3 to acquire information about its own conditions (e.g. speed and acceleration) while the vehicle V is circulating and also during a road accident involving said vehicle V. Such information comprises at least two different types of data: telemetric data, corresponding to the speed and/or acceleration of the vehicle V whereon the apparatus 3 has been installed, and geolocation data; in accordance with one possible embodiment of the invention, the data relating to speed and acceleration refer to different orthogonal axes, thus providing more complete information about the conditions of the vehicle V during a road accident. In particular, thanks to this feature it is possible to know the direction from which a collision occurred, thus allowing the processing means 10 to more effectively verify the consistency between the information included in the electronic accident report document and the information detected by the apparatus 3. In fact, by knowing the direction, orientation and intensity of the acceleration detected by the accelerometric means it is possible to estimate the type of damage that could be caused to a vehicle, to its occupants, and to any other vehicles involved in the accident. This reduces the risk that the organization accountable for paying compensation for damages will be swindled, because the processing means 10 can, for example, know whether a vehicle was rear-ended or it rear-ended another vehicle.

Preferably, the apparatus 3 can acquire geolocation data through the positioning means and transmit such data to the processing means 10 through the transmission means; such data are typically those available for satellite navigation and comprise, among other things, the geographical coordinates of the position of the apparatus 2 and of the vehicle V whereon it has been installed.

The positioning means allow the processing means 10 to know the exact place where a road accident has occurred, thus making it possible for said processing means 10 to verify, in a more effective manner, the consistency between the information included in the electronic accident report document, in particular about the place of the accident (see box 2 in the form of Fig. 1), and the information detected by the apparatus 3, thereby reducing the probability that the insurance company will suffer a fraud.

The vehicle monitoring apparatus 3 is configured for transmitting this information, through its own transmission means, to the processing means 10 over one or more communications networks schematically represented in Fig. 2 as a cloud, such as, for example, a telephone network, the Internet, and/or a dedicated network; the apparatus 3 is also adapted to be connected, via a cable or electromagnetic waves (e.g. via radio waves by using the so-called "Bluetooth®" protocol, or optical waves, infrared waves, etc.), to an electronic processor PC (personal computer) for personal or private use or to the filling means 2. This increases the amount of information that can be automatically attached to and/or entered into the accident report form (e.g. registration number, policy number associated with the apparatus 3, position where the accident has occurred, etc.), thereby reducing the amount of information that needs to be entered manually. This reduction of the risk of entry errors leads to a higher probability that any incongruities that might be detected between the data acquired by the apparatus 3 and the data entered through the filling means 2 are intentional, i.e. due to fraudulent use of the accident report form. This reduces the risk that the organization accountable for paying compensation for damages will be swindled.

In summary, the method for producing an electronic road accident report document according to the invention is implemented in the above-described system 1 and comprises the phases of:
a. acquiring, through the data acquisition means of the apparatus 3, information about the vehicle V (whereon the apparatus 3 has been installed) during the road accident,
b. filling out, through the filling means 2, the electronic accident report document,
c. comparing, through processing means 10, the information acquired by the data acquisition means of the apparatus 3 with the information contained in the electronic accident report document filled out through the filling means 2,
d. releasing, through the processing means 10, the electronic accident report document only if the comparison phase has a predetermined outcome.

By way of example, the predetermined outcome of the comparison is to be understood as a situation in which the position detected by the apparatus 3 at the instant of the accident substantially coincides with the one declared in the electronic accident report document prepared by using the filling means 2, or the accident graph (see box 13 in Fig. 1) corresponds to the information acquired by the data acquisition means of the apparatus 3.

It must be pointed out that the vehicle monitoring apparatus 3 and the filling means 2 may also consist of a single apparatus, such as, for example, a car computer, which can advantageously be configured, e.g. via suitable software downloadable from the Internet or the like, for performing both tasks.

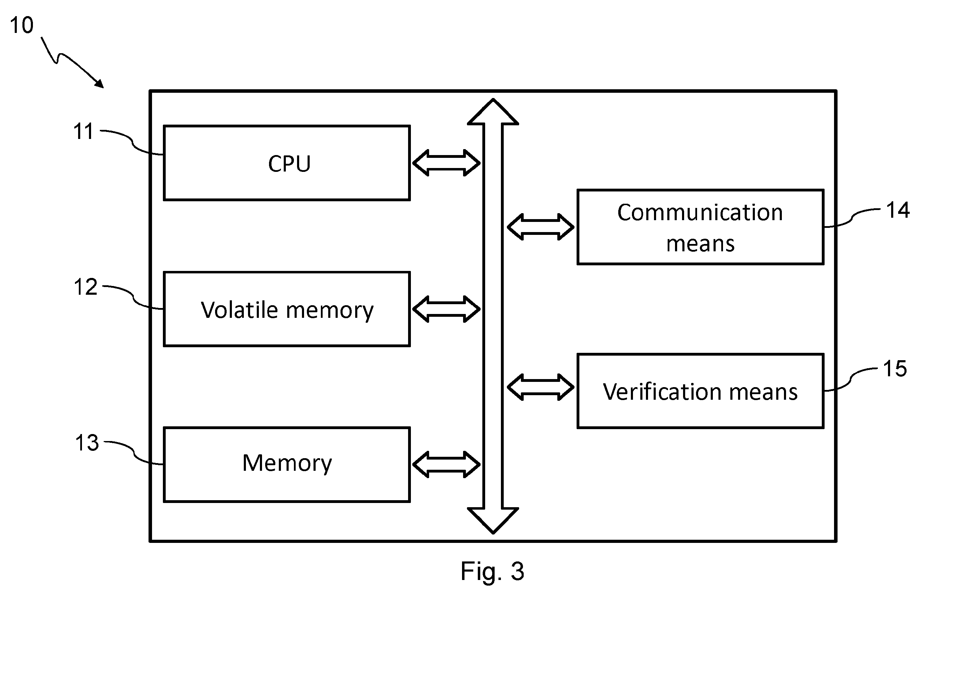

With reference to Fig. 3, the processing means 10 consist of a server apparatus, which may be more or less complex depending on the number of apparatuses 2 to be handled and on the complexity of the associated network.

The processing means 10 may be arranged remotely from the apparatuses, e.g. in a suitable data processing centre, preferably managed by an organization that pays compensations for damages caused by road accidents, and are advantageously accessible to authorized parties via a set of computer terminals T.

The processing means comprise, among other things, the following components:
- a central processing unit (CPU) 11;
- a volatile memory 12, e.g. RAM memory, for loading the instructions that the central processing unit 11 will have to execute;
- a mass memory 13, e.g. one or more mechanical or solid hard disks, for storing the instructions/data that must be transferred into the volatile memory 12 and then executed/processed by the CPU 11, as well as the information transmitted by the electronic apparatus(es);
- communication means 14, e.g. an Ethernet and/or WiFi interface or the like, allowing the processing means 10 to gain access to the computer network and to receive, via said network, the information transmitted by the electronic apparatus(es).

This system further comprises verification means that can verify the authenticity of the information acquired by the apparatus(es) 3 and by the filling means 2 and transmitted to the processing means 10, so as to reduce the probability that the organization accountable for paying compensation for damages caused by a road accident will suffer a fraud, since it will be possible to prove the swindlers' identities.

It must be pointed out that all data provided by the apparatus 3 and by the filling means 2 are correlated to the time of the respective internal clocks, which are included in said apparatus 3 and in said means 2.

Thus, for example, if an accident occurs at 12.00 and involves the vehicle V whereon the apparatus 3 has been installed 3, the audio-video data (possibly also acquired by said apparatus 3), the telemetric data, such as the speed and acceleration of the vehicle V, and the positioning data recorded during the accident (latitude and longitude) will be transmitted to the processing means 10 and/or to the filling means 2, which will then enter and/or attach them, through the processing means comprised in said filling means 2, into/to the accident report form already filled out (or still to be filled out) by the parties involved in the accident; subsequently, the communication means of the apparatus 2 will transmit the completed accident report form to the processing means 10, which are equipped with algorithms that will evaluate the coherence and establish the trustworthiness of the acquired data.

Furthermore, if after the impact caused by the accident shown in the images no coherent variations in the speed and/or acceleration of the vehicle V are found, the processing means 10 will signal an anomaly indicating a high risk of fraud for the insurance company. Such a signalling could mean, in fact, that the images do not comply with the physical parameters of the vehicle, and might therefore have been altered in order to cheat the insurance company.

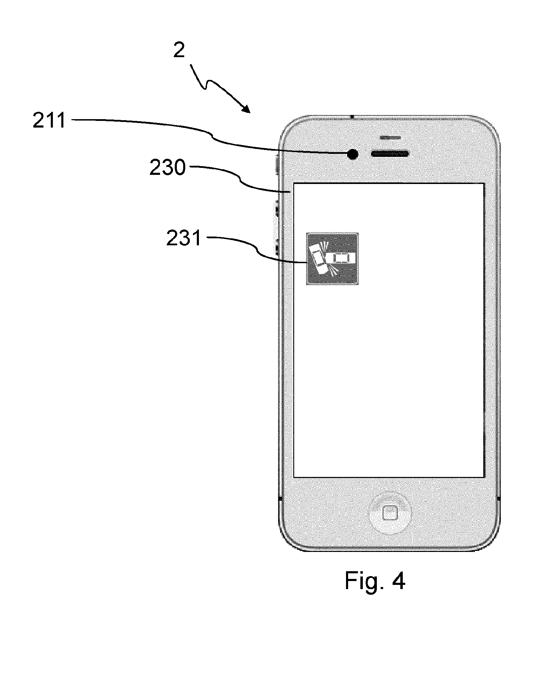

Also with reference to Fig. 4, in a preferred embodiment of the system 1 according to the invention the filling means 2 consist of a mobile phone (of the type commonly referred to as smartphone) or another mobile telecommunications device (e.g. a tablet or the like), enabled for data transmission (possibly in addition to voice communication); the filling means 2 (hereafter also referred to as "mobile terminal" 2) comprise at least processing means (such as a data processing unit, i.e. a microprocessor), network connection/transmission means, a memory containing at least one data acquisition program, the functions of which will be detailed below, a memory for allocation of the acquired data, as will be further explained below (these elements, which are per se known, are included in the telephone apparatus 2 and are not therefore shown in Fig. 4).

The data acquisition means of the mobile apparatus 2 comprise at least one video camera 211, which can take video shots, and preferably also a microphone, so that the videos captured by the video camera 211 will be associated with external sounds and noise.

The data acquisition means may advantageously also include geolocation means, which allow finding the position of the mobile apparatus 2 and, consequently, of the user as the electronic accident report document is being filled out.

The apparatus 2 may also be configured for providing assistance for filling out the accident report document, so as to make it easier to specify the damages suffered or caused, thus improving the correctness of the data entered into the accident report document. In particular, the processing means are also configured for generating an interactive graphic representation, wherein said graphic representation can be actuated via the acquisition means in order to acquire information about the damages suffered by the vehicles V involved in the accident. The acquisition means of the apparatus 2 may preferably comprise a touch-sensitive interface (e.g. a display covered with a capacitive or proximity sensor 230), which can show the interactive graphic representation of the vehicles and allow highlighting the damages through a pointer controllable via said touch-sensitive interface.

It should be noted that the above-mentioned elements are already present in some models of cellular telephones currently available on the market; it is therefore deemed unnecessary to provide further details in this regard, and reference should be made for brevity to the technical literature on this matter.

However, what is not yet known are the functions carried out by these elements, which may advantageously be controlled by a program stored in the mobile device 2, which program can be downloaded externally, e.g. through distribution services (via Internet, cable or the like) provided by specialized companies.

Said acquisition program, when executed, has the processing unit of the mobile terminal 2 carry out the following steps:
- storing at least a part of a video/audio data stream generated by the video camera 211, preferably compressed in MPEG format, which can then be saved into the memory of the apparatus 2;
- storing at least a part of the data relating to the position of the mobile apparatus 2, provided by the geolocation means with which it is equipped;
- filling out the electronic accident report document by entering and/or attaching the audio/video stream generated by the video camera 211 and/or the position data provided by the geolocation means;
- transmitting the electronic accident report document thus filled out to the processing means 10 through the network, the mobile apparatus 2 being equipped with transmission means configured for allowing access to a mobile network and/or a WiFi network and/or the like.

The processing means 10 preferably verify the authenticity of the received data and, in the affirmative case, store them; the authenticity verification thus carried out offers the advantage that the transmitting apparatus 2 is exactly identified, thus also identifying the physical person with whom said apparatus 2 has been associated or to whom it has been assigned, so as to reduce the probability that the organization accountable for paying compensation for damages will suffer a fraud.

Authorized people can then consult (via the computer terminals T) the accident data (i.e. the accident report forms and the related data detected by the vehicle monitoring apparatuses 3 during the respective accidents), the authenticity of which will have been ascertained by the processing means 10, so that they will be able to take any necessary steps.

Authorized people may include personnel of insurance companies, technicians and experts, judges, etc., carrying out their own official duties.

The user interface of the filling means 2 preferably consists of an Internet site and/or an application (a so-called App) through which the accident report form can be easily filled out, thus making data transmission easier and quicker also for unskilled people. In fact, the sooner the parties involved in a road accident will transmit the accident report form and the data detected during the road accident, the lower the probability that the organization accountable for paying compensation for damages will be swindled, because there will not be sufficient time to try to fraudulently modify the data detected during the road accident (e.g. increasing the longitudinal acceleration value in the case of a rear-ending crash).

The vehicle monitoring apparatus 3 is configured for executing the program when a user selects a specific application, preferably identified by a corresponding icon 231 shown on the display 230 of the apparatus 2, or when he/she presses an enabled key, if it is equipped with a keyboard.

To this end, several options are available.

The first option is that the program is coded in a manner such that, when the accelerometric means detect a collision caused by an accident (e.g. acceleration along a certain axis), said apparatus 3 will acquire, for a certain period (e.g. thirty seconds) a stream of audio-video data (if said apparatus 3 also comprises audio/video acquisition means), a stream of geolocation data generated by the positioning means, and a stream of telemetric data generated by the accelerometric means at successive instants and at a predetermined frequency, which may vary from case to case but is preferably higher than 10 Hz: this means that the data are acquired every tenth of a second or smaller fractions thereof (even hundredths or thousandths of a second).

It must be pointed out that these data may be already contained in a circular buffer comprised in said apparatus 3, thus providing a data sequence beginning before the accident (e.g. 5-10 seconds before the accident).

In order to make the method of the invention executable on a large scale also by the general automotive public by using mobile apparatuses 2 only (with no vehicle monitoring apparatuses 3), such as cellular phones, tablets and similar devices of common use, it is necessary that the acquired data can be sent by the same apparatuses 2 in formats suitable for transmission over existing telecommunications networks (cellular telephony, Internet, etc.).

Although for video and audio data it would be preferable to use compression formats such as MP3, MPEG and the like, transmission may understandably be a problem when large quantities of data are involved, also because adequate networks (i.e. with a sufficiently broad band) are not always available.

Therefore, transmitting images about long time intervals (longer than 60 seconds) is not a feasible option, since it would require the transmission of very large amounts of data (very big files).

Consequently, it is inconceivable to activate the mobile apparatus 2 every time the driver gets into the car and to acquire data throughout the journey, even just for a few tens of minutes, as is the case when driving through town (e.g. from home to work).

In other words, it can be said that, since the moment when an accident may occur cannot be foreseen a priori, a solution needs to be found to avoid having to acquire and store large quantities of data provided by the apparatus 2 throughout the journey of the vehicle V, because this would require too much memory that could not be supported by a mobile apparatus 2 consisting of a common mobile phone or another similar portable device.

To overcome this problem, one option is to set up the apparatus 2 for acquiring and storing the (audio-video, telemetric, positioning) data into a local memory area in a continuous stream, wherein the data are overwritten after a certain period of time, e.g. every 30 or 60 seconds.

When the vehicle V equipped with the apparatus 2 has an accident, the latter's accelerometric means will detect a speed and/or acceleration variation that will trigger a procedure ("routine") of the apparatus 2, whereby the data relating to a preset time interval before and after the accident (e.g. 15-20 seconds before and after) will be stored into a special memory area of the apparatus 2 and will then be sent to the processing means 10.

As explained above, transmission may occur directly through an SMS or MMS telephone message, an email message, or a specially developed binary format, in that the apparatus 2 is a mobile telecommunications device such as a mobile phone, a tablet or the like.

Transmission may be triggered either automatically by the apparatus 2, if the latter has been so programmed, or manually.

The data detected by the acquisition means of the apparatus 2 or 3 during the accident can be transmitted to the processing means 10 prior to the completed accident report form, thus reducing the risk that the organization accountable for paying compensation for damages will be cheated, because a swindler will not have sufficient time to try to modify (to his/her advantage) the data detected during the accident, and there will be a high probability that any incoherence between the accident report form and said data will be detected by the processing means 10.

As an alternative to or in combination with this mode of operation, according to a preferred embodiment of the invention the apparatus 2 continuously acquires and stores the audio-video, telemetric and geolocation data of the vehicle V whereon it has been installed for long preset periods, e.g. 10 minutes or even longer, depending on the memory capacity of the mobile apparatus 20.

Preferably, the length of said period can be set at will by a user, e.g. prior to beginning a journey of known duration.

If during such time interval no accident takes place, the acquired data will be automatically deleted by the apparatus 2, thereby freeing up memory space for future use, for a period equal to the previous one.

If, on the contrary, an accident occurs during said time interval, the significant data, i.e. those relating to the instants before and after the accident (a few seconds will suffice), can be selected from the video, audio, telemetric and geolocation data stored in the apparatus 2.

This selection can be made by using image processing programs like those available in some models of mobile phones (smartphones), or by using suitable (software) programs created for processing telemetric and geolocation data, which can be installed into the mobile apparatus 2 and/or a computer PC, i.e. a personal computer or the like.

In this way, data packets (i.e. files) of limited size are advantageously obtained, which can then be easily transmitted to the processing means 10 directly by the apparatus 2, along with the accident report document, via messages (SMS, email or the like); of course, the same data selection and transmission operations can also be carried out by using a computer PC for private use connected to the network, as shown in Fig. 2.

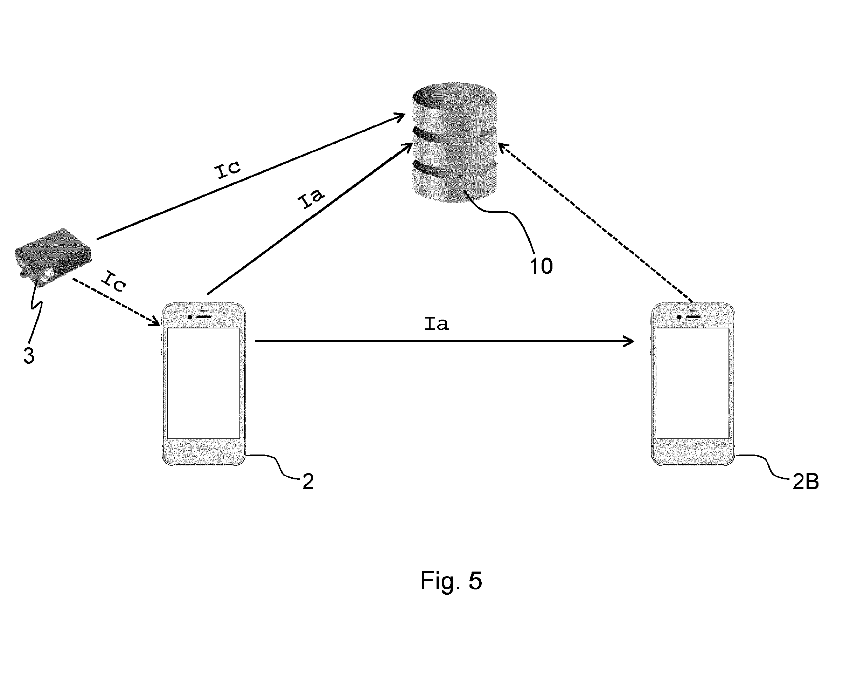

With reference to Fig. 5, after the time instant at which the road accident has occurred the monitoring apparatus 3 will send to the processing means 10 the data Ic detected by the acquisition means before and/or after and/or during the road accident.

Optionally, these data may also be sent to the filling means 2, so that the accident report document can be filled out, preferably automatically, leading to a further increase in the correctness of the information entered into the accident report document, and to a further reduction of the risk that the organization accountable for paying compensation for damages will be swindled.

Afterwards, the filling means 2 will exchange data Ia (names, insurance data, suffered damages, etc.), so that the exchange of data between the different parties involved in the accident can also take place through the communication means of the filling means 2 (e.g. USB, Bluetooth, email, NFC or the like). These communication means can thus allow the exchange of one or more messages, containing the data Ia, with a second apparatus 2B, i.e. establishing a connection between two similar apparatuses 2,2B, so as to further improve the correctness of the data entered into the accident report document.

Furthermore, when data are exchanged between two such apparatuses 2,2B, the apparatus 2 can preferably send a copy of said data Ia to the processing means 10 as well, so that the processing means 10 will be informed about the exchange of data between the two apparatuses 2,2B (in particular about the instant when the exchange has occurred) and about what data have actually been exchanged. In this way it is possible to reduce the risk that the organization accountable for paying compensation for damages will be swindled, because said organization will have the possibility of verifying that no changes have been made (after the exchange) to the data written in the accident report document.

In addition to the above, the second apparatus 2B will be able, after having received the data Ia, to fill out another accident report document and send it to the organization accountable for paying compensation for damages in electronic format (preferably by sending said document in PDF format to the processing means 10 by electronic mail) or in paper format (e.g. by regular mail). Thus, two distinct accident report documents are transmitted to the processing means 10, which documents can then be used for validating the claim to be made to the respective organizations accountable for paying compensation for damages. In fact, the information contained in both accident report documents must be coherent.

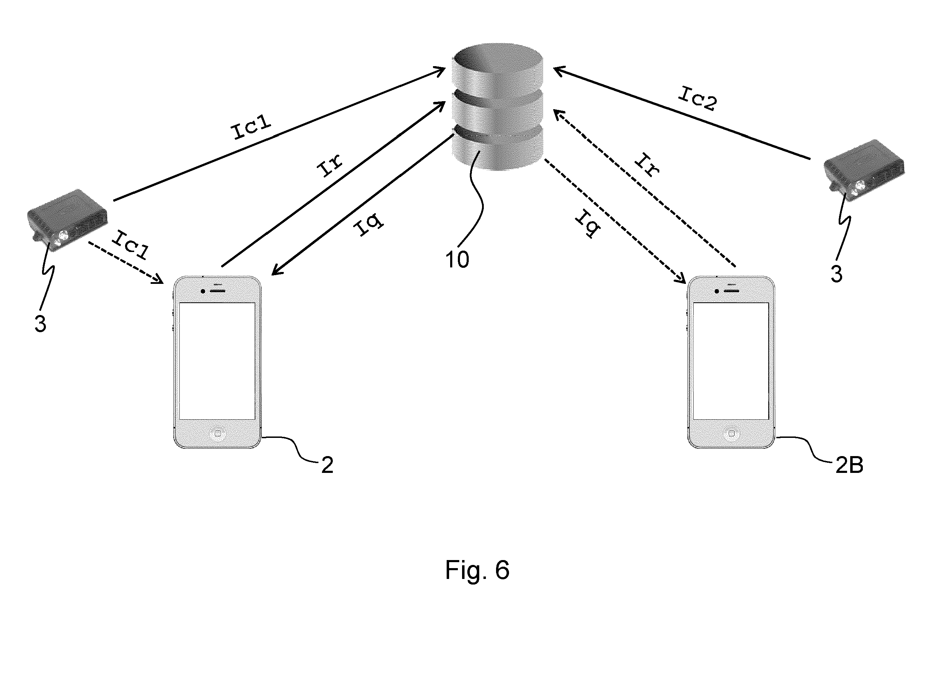

Also with reference to Fig. 6, the filling means 2 may also be configured for exchanging information with the processing means 10 during the assisted data acquisition process, so that said processing means 10 can verify the authenticity of the data entered and/or provide information useful for verifying the correctness and truthfulness of said data.

In particular, after a road accident has occurred and after the monitoring apparatuses 3 have sent to the processing means 10 the information Ic1 and Ic2 detected by the respective acquisition means, each mobile apparatus 2,2B may transmit a first message containing request information Ir (e.g. the registration and/or policy numbers), which will then be used by the processing means 10 for searching for and/or generating verification information Iq (e.g. insured vehicle type and/or policy validity and/or other information), wherein said verification information Iq will be incorporated into a second message and transmitted to the mobile apparatus 2,2B that sent the first message.

For example, after the registration number and/or the insurance policy number have been entered, the mobile apparatus 2 will transmit to the processing means 10 the information just acquired, so that the processing means 10 will be able to, preferably in real time, search for the verification information Iq corresponding to the entered registration number and/or policy number and send it to the mobile apparatus 2, which is preferably configured for highlighting it (e.g. by displaying it in a bright colour) to its user; in this manner, the user of said apparatus 2 will be able to understand if there are any problems/inconsistencies (e.g. a vehicle/person with expired insurance, an insurance policy not corresponding to the vehicle involved in the accident, a stolen vehicle, or the like) and can therefore take the necessary actions, e.g. call the police or the like, so as to reduce the risk that the organization accountable for paying compensation for damages will be swindled.

The above example of the invention is particularly advantageous because it can be implemented on commercially available mobile phones, thus requiring no additional costs for specific apparatuses.

The mobile apparatus 2 may also comprise optical reading means configured for reading information in an assisted manner, e.g. reading the data of the insurance certificate of the other party involved in the accident, thus improving the correctness of the data entered into the accident report document.

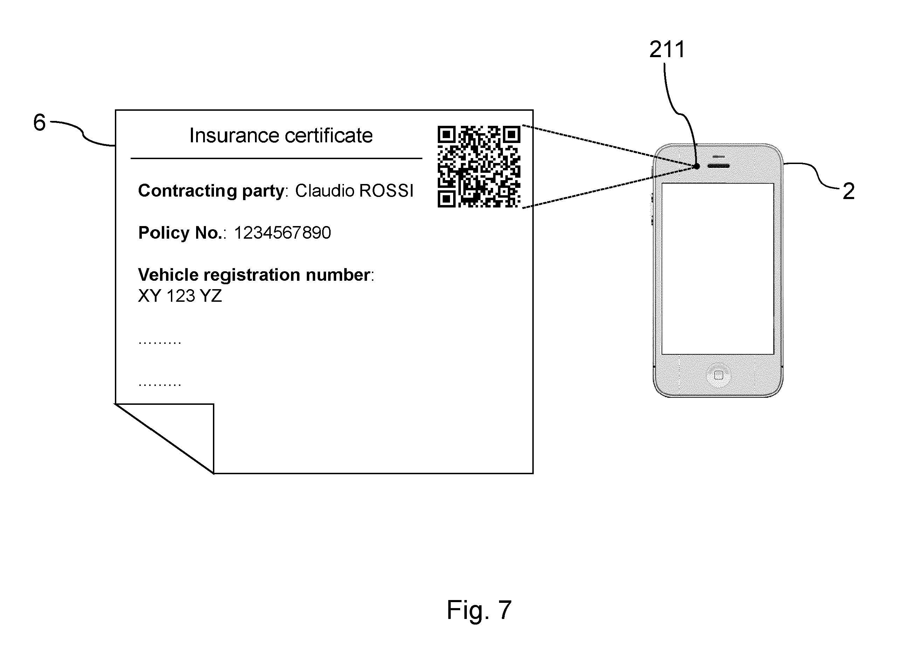

Also with reference to Fig. 7, the optical reading means may comprise the video camera 211 and a software program for image recognition, which, after having acquired the image of the number plate and/or of the vehicle identification number and/or of the insurance certificate and/or the like, will convert said image into text by executing a so-called optical character recognition process (OCR).

As an alternative to or in combination with the above, the recognition software can also extract the data from a bar code 61 that may be either monodimensional or, preferably, bidimensional (such as, for example, a QR-code like the one shown in Fig. 5), in which information about the insured party (name, insurance policy contracting party, policy number, vehicle registration number, insurance company, etc.). It must be pointed out that this bar code 61 may preferably be shown on the insurance certificate 6 of the insured party, so that it will be very likely found on every circulating vehicle.

The invention may therefore be subject to many variations, without however departing from the novelty spirit of the inventive idea. It will be apparent to those skilled in the art that in the practical implementation of the invention the illustrated details may have different shapes or be replaced with other technically equivalent elements.

It can therefore be easily understood that the present invention is not limited to the explanatory examples described herein, but may be subject to many modifications, improvements or replacements of equivalent parts and elements without departing from the basic inventive idea, as set out in the following claims.

## Claims

1. System (1) for producing an electronic road accident report document, comprising
- at least one vehicle monitoring apparatus (3) adapted to be installed in a vehicle (V) and comprising data acquisition means adapted to acquire information about said vehicle (V) as it circulates, and transmission means configured for transmitting at least a part of said information,
- filling means (2) adapted to fill out the electronic accident report document, and comprising communication means configured for transmitting said completed electronic accident report document,
- processing means (10) configured for receiving said information from the monitoring apparatus (3) and the completed electronic accident report document from the filling means (2), comprising a central processing unit (11) configured for comparing said information with the information contained in the completed electronic accident report document.

2. System according to claim 1, wherein the processing means (10) are adapted to release the electronic accident report document if said comparison between the information received from the monitoring apparatus (3) and the information contained in the completed electronic accident report document has a predetermined outcome.

3. System according to claims 1 or 2, wherein the data acquisition means of the vehicle monitoring apparatus (3) comprise positioning means.

4. System according to claims 1, 2 or 3, wherein the data acquisition means of the vehicle monitoring apparatus (3) comprise accelerometric means.

5. System according to any one of claims 1 to 4, wherein the data acquisition means of the vehicle monitoring apparatus (3) comprise audio and/or video acquisition means.

6. System according to any one of claims 1 to 5, wherein the vehicle monitoring apparatus (3) coincides with the filling means (2).

7. System according to any one of claims 1 to 6, wherein the transmission means of the vehicle monitoring apparatus (3) are configured for transmitting at least a part of said information, which has been acquired through the data acquisition means, to the filling means (2).

8. System according to claim 7, wherein the filling means (2) comprise processing means configured for entering and/or attaching said information into/to the accident report form.

9. System according to any one of claims 1 to 8, wherein the filling means (2) comprise optical reading means (211), and wherein the processing means of said filling means are also configured for filling out said electronic accident report document on the basis of data acquired by said optical reading means (211).

10. Method for producing an electronic road accident report document, comprising the phases of
a. acquiring, through data acquisition means, information about a vehicle (V) during a road accident,
b. filling out, through filling means (2), the electronic accident report document,
c. comparing, through processing means (10), the information acquired by the data acquisition means with the information contained in the completed electronic accident report document,
d. releasing, through the processing means (10), the electronic accident report document if the comparison phase has a predetermined outcome.

11. Method according to claim 10, wherein the information acquired during a road accident comprises geolocation information generated by positioning means.

12. Method according to claims 10 or 11, wherein the information acquired during the road accident comprises accelerometric information generated by accelerometric means.

13. Method according to any one of claims 10 to 12, wherein the information acquired during the road accident comprises audio and/or video information generated by audio and/or video acquisition means.

14. Method according to any one of claims 10 to 13, wherein, during the filling phase, the information acquired during the acquisition phase is entered into and/or attached to said electronic accident report document.

15. Method according to any one of claims 10 to 14, wherein, during the filling phase, at least a part of the electronic accident report document is filled by using data acquired by optical reading means (211).
